# EUROPÄISCHE PATENTSCHRIFT

(11) **EP 2 829 177 B1**
(45) Veröffentlichungstag und Bekanntmachung des Hinweises auf die Patenterteilung: **29.06.2016**
(21) Anmeldenummer: 14178217.7
(22) Anmeldetag: 23.07.2014
(51) Int. Cl.: A01M 7/00

(54) **Landwirtschaftliche Verteilmaschine mit Verteilvorrichtung und System zur Steuerung der Verteilvorrichtung**
Agricultural spreader machine with distribution device and system for controlling the distribution device
Épandeuse agricole équipée d'un dispositif d'épandage et système de commande du dispositif d'épandage

(30) Priorität: 24.07.2013 DE 102013214469
(43) Veröffentlichungstag der Anmeldung: 28.01.2015
(73) Patentinhaber: HORSCH LEEB Application Systems GmbH, 94562 Oberpöring (DE)
(72) Erfinder: Leeb, Theodor, 94562 Oberpöring (DE); Hirthammer, Otto, 93128 Hirschling (DE)
(74) Vertreter: Benninger, Johannes

(56) Entgegenhaltungen:
- EP-A1- 2 526 755
- EP-A2- 2 397 027
- DE-A1- 10 054 285
- US-A- 5 988 528

## Beschreibung

Die vorliegende Erfindung betrifft eine landwirtschaftliche Verteilvorrichtung zum Ausbringen von flüssigen oder festen Wirkstoffen mit den Merkmalen des unabhängigen Anspruch 1. Die Erfindung betrifft zudem ein Verfahren zur Steuerung und/oder Regelung einer solchen Verteilvorrichtung mit den Merkmalen des unabhängigen Anspruchs 9.

Derartige Verteilvorrichtungen bzw. Spritzgestänge werden in landwirtschaftlichen Feldspritzen verwendet. Diese Feldspritzen können als selbstfahrende oder auch als an einem Schlepper oder einem Zugfahrzeug angehängte oder angebaute Spritzmaschinen ausgebildet sein. Die Spritzgestänge weisen teilweise sehr große Arbeitsbreiten von mehr als zwanzig Metern auf. Derartige Gestänge bestehen meist aus mehreren Abschnitten, welche jeweils um eine vertikale Achse drehbar gelagert an einem Mittelteil angebracht sind. Für Transportfahrten können die einzelnen Abschnitte um diese vertikalen Achsen verschwenkt und zusammengeklappt werden, um somit die für die Transportfahrt maximal zulässige Breite der Feldspritze zu erreichen.

Gerade bei Verteilvorrichtungen großer Arbeitsbreite kommt es vor, dass sich diese in Fahrtrichtung oder entgegengesetzt zur Fahrtrichtung um die vertikalen Achsen bewegen bzw. schwingen können. Diese Bewegungen können auf vielfältige Weise hervorgerufen werden, bspw. durch Lenkbewegungen der Feldspritze, durch Unebenheiten der zu bearbeitenden Bodenstruktur, oder durch Geschwindigkeitsänderungen der Feldspritze, also durch Beschleunigung oder Verzögerung. Durch die Schwingbewegungen entstehen an den vertikalen Achsen teilweise sehr hohe Kräfte.

Um die Kräfte bzw. die Schwingungsbewegungen aufnehmen bzw. reduzieren zu können werden verschiedenste Lösungsansätze verfolgt. So werden die vertikalen Achsen zum Teil mit sog. "Silent-Blöcken" versehen. Ebenso sind Spritzgestänge bekannt, bei denen mit Hilfe von Gasdruck- oder Hydraulikdämpfern versucht wird, die Schwingungen zu kompensieren.

Ein Dämpfungssystem für ein Spritzgestänge ist bspw. in der DE 100 54 285 A1 beschrieben. Die Spritzgestängeabschnitte sind um aufrechte Achsen schwenkbar angebracht. Über diese Achsen kann das Verteil- bzw. Spritzgestänge schwingen. An dem Spritzgestänge sind Messvorrichtungen angebracht, welche die Auslenkung und die Schwingungsfrequenz des Spritzgestänges aus einer Ruhelage ermitteln. Die ermittelten Werte werden in einer Regeleinrichtung verarbeitet. Um den Pendel- bzw. Schwingbewegungen entgegen zu wirken, werden aktive Stellglieder von dieser Regeleinrichtung derart angesteuert, dass diese der Pendelbewegung des Verteilergestänges um die aufrechte Achse aktiv entgegenwirken.

Ein Schwingungsdämpfungssystem, bei dem ein Schwingungstilger direkt am Verteilergestänge angebracht wird und keine Verbindung mit dem Rahmen der Feldspritze besteht, offenbart die DE 10 2008 007 312 A1. Hierbei kann der Schwingungstilger bspw. als Feder-Masse-System ausgebildet sein, welches direkt an den einzelnen Spritzgestängeabschnitten angebracht ist.

Einen weiteren Dämpfungsansatz beschreibt die US 2003 052 188 A1. Bei diesem ist das Spritzgestänge mit zusätzlichen Zylindern ausgestattet. Diese sind zwischen einem Mittelteil und seitlichen Sektionen des Spritzgestänges angebracht. Die Zylinder arbeiten so, dass diese dem Schwingen entgegenwirken bzw. die Bewegungsfreiheit der Verteilvorrichtung verringern. Hierdurch werden zwar die Schwingbewegungen des Spritzgestänges reduziert; dies geschieht jedoch permanent, wodurch nicht nur die Bewegungsfreiheit reduziert, sondern auch das Dämpfungsverhalten unterbunden wird. Das bedeutet, dass bei Beschleunigung oder Verzögerung sowie bei Kurvenfahren das Spritzgestänge relativ starr ist, wodurch wiederum große Kräfte wirken und das Spritzgestänge beschädigt werden kann.

Eine weitere landwirtschaftliche Verteilmaschine, die mit Dämpfungsmitteln für das Spritzgestänge ausgestattet ist, geht aus der EP 2 526 755 A1 hervor. Die Ansteuerung der Dämpfungsmittel erfolgt hierbei nicht kontinuierlich, sondern mit unterschiedlichen Regelcharakteristiken. Bei Geradeausfahrt wird mit weicher Regelcharakteristik gedämpft, während die Bewegungen des Spritzgestänges bei Fahrten quer zu einem Hang mit harter Regelcharakteristik gedämpft werden.

Weiter beschreibt die US 5 988 528 A1 eine Möglichkeit zur Dämpfung von Auslegerarmen eines Verteilergestänges. Mittels eines Stellelements, bspw. in Form eines Hydraulikzylinders, soll einer Auslenkung der Auslegerarme bei einem plötzlich auftretenden Hindernis und/oder bei hohen dynamischen Kräften entgegengewirkt werden.

Die meisten der aus dem Stand der Technik bekannten Dämpfungssysteme weisen den Nachteil auf, das diese kontinuierlich arbeiten, d.h. es wird permanent versucht, den Schwingbewegungen entgegen zu wirken, unabhängig von der Bewegungsart, welche die Feldspritze aktuell durchführt. Handelt es sich um eine Dämpfung mit "Silent-Blöcken" oder sonstigen elastischen Federelementen, besteht das Problem, dass diese einen gewissen Federweg besitzen; das heißt, dass das Spritzgestänge trotz der Dämpfung einen gewissen Federweg besitzt, bei dem die Dämpfung noch nicht aktiv ist. Dies macht sich besonders bei Hangfahrten bemerkbar. Hier neigt das Spritzgestänge dazu, dass es sich, je nach Fahrtrichtung, nach vorne oder nach hinten bewegt. Also dass die einzelnen Abschnitte nicht mehr wie gewünscht in einer Linie quer zur Fahrtrichtung stehen. Jedoch besitzen elastische Federelemente den Vorteil, dass das Spritzgestänge bspw. bei Beschleunigung, Verzögerung oder Kurvenfahrt noch einen ausreichenden Federweg besitzt. Bei den drei vorher beschriebenen Patentansätzen ist dieser Federweg bei Beschleunigung und Verzögerung nicht mehr vorhanden, da die Dämpfung kontinuierlich erfolgt und nicht unterscheiden kann, um welche Art der Bewegung es sich handelt; d.h. bei diesen Ansätzen kommt es trotz der Dämpfung bei Bewegungsänderung zu hohen Kräften, die auf das Spritzgestänge wirken.

Der Erfindung liegt also das vorrangige Ziel zu Grunde, eine Verteilvorrichtung bzw. ein Spritzgestänge für eine landwirtschaftliche Verteilmaschine zur Verfügung zu stellen, bei der unerwünschte Schwingungen des Verteilgestänges, das normalerweise aufgrund seiner Ausmaße unvermeidlichen Schwingungen bzw. Bewegungen in Fahrtrichtung oder entgegengesetzt zur Fahrtrichtung unterliegt, in Abhängigkeit von den jeweiligen Fahrzuständen und/oder Geschwindigkeiten bzw. Beschleunigungen des Trägerfahrzeuges in variabler Weise gedämpft oder zumindest abgeschwächt werden.

Das Ziel der Erfindung wird mit den Gegenständen der unabhängigen Patentansprüche erreicht. Merkmale vorteilhafter Weiterbildungen der Erfindung ergeben sich aus den jeweiligen abhängigen Ansprüchen. So schlägt die Erfindung zur Erreichung des genannten Ziels eine landwirtschaftliche Verteilmaschine in Form einer Feldspritze vor, bei der Mittel bzw. Überwachungseinrichtungen angebracht sind, mit Hilfe derer zum Einen die Aktuelle Position der Verteilvorrichtung und zum Anderen die aktuell durch die Feldspritze durchgeführte Bewegungsart ermittelt werden. Anhand dieser Daten werden Mittel angesteuert, mit denen die Dämpfung der Verteilvorrichtung angepasst wird.

Die Erfindung sieht eine Verteilvorrichtung bzw. ein Spritzgestänge vor, das aus mehreren Gestängeabschnitten besteht. Die normalerweise symmetrisch zu einer Fahrzeuglängsachse oder vertikalen Längsebene durch die Verteilvorrichtung ausgerichteten Gestängeabschnitte können hierbei jeweils in eine linke und eine rechte seitliche Sektion zusammengefasst werden. Die einzelnen Abschnitte bzw. die seitlichen Sektionen sind jeweils über vertikale oder annähernd vertikale Schwenk- bzw. Drehachsen untereinander verbunden, wobei die Sektionen jeweils wiederum an einem Mittelteil der Verteilvorrichtung angebracht sind. Dieses Mittelteil bildet normalerweise die Aufhängung am Trägerfahrzeug und ist üblicherweise um eine horizontale Längsachse schwenkbar, um die Gestängeabschnitte an eine Hanglage anpassen zu können, oder um die gesamte Verteilvorrichtung verschwenken zu können, bspw. um Hindernissen auszuweichen.

Die Verteilvorrichtung der Feldspritze kann hierbei grundsätzlich mindestens zwei Positionen bzw. Stellungen einnehmen. Eine erste Position ist hierbei eine Arbeitsstellung oder Arbeitsposition. Bei dieser Arbeitsposition befinden sich die Sektionen sowie das Mittelteil annähernd in einer Linie quer zur Fahrtrichtung der Feldspritze. In einer zweiten Position, der Transportposition, werden die einzelnen Gestängeabschnitte über die Schwenk- bzw. die Drehachsen um 90° bzw. um 180° gegeneinander verschwenkt, so dass diese dann bspw. seitlich an der Feldspritze angeordnet sind.

Üblicherweise ist jede Sektion des Spritzgestänges mit zwei, drei oder mehr Gelenken versehen, so dass jeder der beiden Auslegerarme eines Spritzgestänges mehrfach gefaltet werden kann, indem die jeweiligen Abschnitte an den Gelenkstellen für die Transportposition um 180° eingeklappt oder für die Arbeitsposition in gestreckte Lage auseinandergefaltet werden. Am Mittelteil können die eingefalteten Sektionen normalerweise um 90° nach vorne geschwenkt werden, um die Transportposition einzunehmen, so dass die beiden Sektionen in dieser Transportposition in paralleler Lage zueinander und zur Fahrtrichtung seitlich am Fahrzeug anliegen, bspw. seitlich an einem Spritzmittelbehälter.

Die die seitlichen Sektionen in der Arbeitsposition besonders an den Gelenken, mit denen sie am Mittelteil aufgehängt und schwenkbar angelenkt sind, aufgrund der großen Länge des Spritzgestänges und der seitlichen Auslegerarme erhebliche Kräfte einleiten und unter Umständen in unerwünschte Schwingungen und Auslenkungen geraten können, kann es sinnvoll sein, an diesen Stellen mit geeigneten Dämpungselementen zu arbeiten, um diese Schwingungen zu reduzieren und um bspw. schädliche Resonanzschwingungen zu vermeiden oder zu unterdrücken.

Die Erfindung sieht zunächst eine Geschwindigkeitsüberwachung vor. Mit dieser wird die aktuelle Bewegungsart der Feldspritze gemessen; d.h. es wird ermittelt, ob die Feldspritze mit einer kontinuierlichen Geschwindigkeit bewegt wird oder ob die Feldspritze beschleunigt oder verzögert wird. Als Überwachungsinstrumente können bspw. ein Radarsensor oder ein Impulsgeber verwendet werden. Darüber hinaus sieht die Erfindung eine Positionsüberwachung für das Spritzgestänge vor. Mit dieser wird die Auslenkung bzw. die Schwingungsamplitude, welche die seitlichen Sektionen durch das Schwingen erfahren, ermittelt. Die Positionsüberwachung kann bspw. mittels eines Winkelsensors, der zwischen dem Mittelteil und der seitlichen Sektion angeordnet, ist erfolgen.

Die durch die Überwachungseinrichtungen ermittelten Werte werden anschließend an eine Regeleinheit bzw. an einen Maschinenrechner übermittelt und von diesem ausgewertet. In dieser Regeleinheit ist zusätzlich eine vorher definierte Zeit hinterlegt, mit welcher der Zeitraum ermittelt bzw. überwacht wird, in dem eine gewisse Auslenkung oder eine gewisse Bewegungsart vorliegt.

Liegt nun bspw. über einen vorher definierbaren Zeitraum eine konstante Geschwindigkeit vor und wird durch die Positionsüberwachung eine Schwingungsamplitude überschritten, erkennt die Regeleinheit, dass es sich um eine Hangfahrt handelt, und steuert ein Ventil an. Zwischen dem Mittelteil und den seitlichen Sektionen der Verteilvorrichtung ist ein Mittel bspw. in Form eines Stellantriebs angebracht. Dieser Stellantrieb wird über das vorher genannte Ventil angesteuert. Über die Positionsüberwachung wird ebenfalls ermittelt, in welche Richtung die Amplitude erfolgt; die Regeleinheit steuert das Ventil bzw. den Stellantrieb nun solange an, bis die Amplitude wieder so gering ist, dass die Gestängeabschnitte wie annähernd in einer Linie quer zur Fahrtrichtung angeordnet sind und verbleibt in dieser Position.

Wird einer der oben genannten Parameter, also konstante Geschwindigkeit, maximale Amplitude oder vordefinierte Zeit, nicht erreicht, lässt sich daraus schließen, dass es sich entweder um eine Kurvenfahrt, eine Beschleunigung oder Verzögerung handelt, und der zusätzliche Stellantrieb regelt nicht nach. In diesem Fall erfolgt die Dämpfung alleine über die, den Schwenk- und Drehachsen zugeordneten elastischen Dämpfungs- bzw. Federelemente.

Das Mittel zur Nachregelung kann hierbei auf verschiedenste Weise ausgeführt sein. So könnte das Mittel, wie oben beschrieben als linearer Stellantrieb ausgeführt sein. Dieser Stellantrieb könnte hier ein hydraulischer oder pneumatisch arbeitender Zylinder sein. Auch elektrische Antriebe wären vorstellbar. In einer bevorzugten Bauform ist das Mittel als hydraulisch arbeitender Zylinder ausgeführt, mit Hilfe dessen zum Einen die seitlichen Sektionen zwischen der Arbeits- und der Transportstellung verschwenkt werden können und zum Anderen auch die Nachregelung bzw. die Dämpfung erfolgt. Auch wäre es denkbar, dass die Positionsüberwachung direkt in diesen Stellantrieb integriert ist. Vorzugsweise ist der Stellantrieb so konzipiert, dass dieser während der Feldfahrt keine seiner Endlagen erreicht.

Generell bleibt zusammengefasst zu sagen, dass für die Überwachung der jeweiligen Parameter verschiedenste Sensoren oder Überwachungseinrichtungen Verwendung finden können, jedoch die Kombination jeweils so gewählt ist, dass eine klare Definition erfolgen kann, um welche Art der Bewegung es sich handelt.

Die vorliegende Erfindung umfasst weiterhin ein Verfahren zur Steuerung und/oder Regelung einer Verteilvorrichtung einer fahrbaren landwirtschaftlichen Verteilmaschine zum Ausbringen von flüssigen und/oder festen Wirkstoffen, die eine an der Verteilmaschine angeordnete, ungefähr parallel zu einer Fahrtrichtung gelagerte Verteilvorrichtung mit einem Mittelteil, und über vertikale Schwenk- und Drehachsen drehbar gelagerten seitlichen Sektionen aufweist. Die Verteilvorrichtung erstreckt sich quer zur Fahrtrichtung und die seitlichen Sektionen weisen über die vertikalen Schwenk- und Drehachsen einen Federweg auf. Zur Reduzierung dieses Federwegs sind geeignete Mittel angeordnet bzw. vorgesehen, welche von einer Regeleinheit in Abhängigkeit von der mittels Überwachungseinrichtungen ermittelten Bewegungsart der Verteilmaschine angesteuert werden. Hierbei kann vorgesehen sein, dass die Mittel zur Reduzierung des Federwegs im Wesentlichen in Phasen kontinuierlicher Fortbewegung der Verteilmaschine aktiv sind, während die Mittel in Verzögerungs- und/oder Beschleunigungsphasen der Verteilmaschine deaktiviert sind. Es hat sich als sinnvoll herausgestellt, zur Vermeidung von hohen mechanischen Belastungen für das Spritzgestänge bzw. dessen lange Ausleger, die Charakteristik einer Regelung oder Dämpfung der Bewegungen des Spritzgestänges besonders in solchen Phasen zu variieren, in denen das Fahrzeug bzw. das Trägerfahrzeug gleichzeitig beschleunigt oder verzögert wird. Die Regelung der Mittel erfolgt vorzugsweise anhand der Geschwindigkeit der Verteilmaschine, der Position der seitlichen Sektionen zu einem Mittelteil und dem Zeitraum, über welchem die Geschwindigkeit und die Position anliegt, wobei die Regelung der Mittel insbesondere dann erfolgten kann, wenn die Verteilmaschine nicht beschleunigt und nicht verzögert wird. Um dies zu ermöglichen, ist die Geschwindigkeitsüberwachung vorzugsweise so konzipiert ist, dass diese ermittelt, ob die Verteilmaschine beschleunigt oder verzögert wird, und dass sie ermittelt, ob die Verteilmaschine mit konstanter Geschwindigkeit bewegt wird.

Nachfolgend werden nochmals die wesentlichen Inhalte und wichtigsten Aspekte der vorliegenden Erfindung in zahlreichen Ausführungsvarianten und technischen Alternativvarianten erläutert, wodurch das Verständnis des wesentlichen Inhalts der Erfindung erleichtert werden soll.

So schlägt die Erfindung eine fahrbare landwirtschaftliche Verteilmaschine zum Ausbringen von flüssigen und/oder festen Wirkstoffen vor, die eine an der Verteilmaschine angeordnete, ungefähr parallel zu einer Fahrtrichtung gelagerte Verteilvorrichtung mit einem Mittelteil und jeweils beidseitig daran angelenkte und über vertikale Schwenk- und Drehachsen drehbar gelagerte seitliche Sektionen aufweist. Die Verteilvorrichtung erstreckt sich quer zur Fahrtrichtung; die seitlichen Sektionen weisen über die vertikalen Schwenk- und Drehachsen jeweils Elastizitäten bzw. einen Federweg auf, wobei zur Reduzierung und/oder Beeinflussung der Elastizitäten bzw. des Federwegs Stell- und/oder Dämpfungsmittel angeordnet sind, welche von einer Regeleinheit in Abhängigkeit von der mittels Überwachungseinrichtungen ermittelten Bewegungsart der Verteilmaschine ansteuerbar sind. Die Stell- und/oder Dämpfungsmittel sind zur effektiven Reduzierung und/oder Beeinflussung der Elastizitäten bzw. des Federwegs in Abhängigkeit von ermittelten Bewegungsparametern der Verteilmaschine variabel ansteuerbar. Mit Bewegungsparametern sind insbesondere unterschiedliche Fahrzustände wie Beschleunigungen oder Verzögerungen des Trägerfahrzeugs bzw. der Verteilmaschine gemeint, die einen Einfluss auf die Bewegungen der seitlichen Sektionen haben können, insbesondere aufgrund deren Länge und Massenträgheiten. Auch das Überfahren von Hindernissen oder Bodenwellen kann einen Einfluss auf das Schwingverhalten der Spritzgestängeausleger haben. Alle diese Situationen können sinnvollerweise bei einer Dämpfungsregelung der Stellelemente berücksichtigt und verarbeitet werden.

Die erwähnten Überwachungseinrichtungen können insbesondere wenigstens Einrichtungen zur Positionsüberwachung und/oder zur Geschwindigkeitsüberwachung umfassen. Typischerweise ist zwischen dem Mittelteil und den jeweils beidseitig daran angelenkten seitlichen Sektionen (dies sind insbesondere die starren oder in sich klappbaren seitlichen Auslegerarme des Spritzgestänges) jeweils wenigstens ein Stell- und/oder Dämpfungsmittel angeordnet, wobei die vorzugsweise zwei Stell- und/oder Dämpfungsmittel jeweils unabhängig voneinander in ihren Elastizitäten bzw. ihren Federwegen verstellbar sind. Normalerweise werden die Stellmittel benötigt, um die Sektionen bzw. Auslegerarme des Spritzgestänges zwischen der Transport- und Arbeitsposition hin und her zu schwenken. Darüber hinaus können die Stellmittel aufgrund ihrer dynamischen Eigenschaften und ihrer feinfühligen Regelbarkeit als Dämpfungselemente genutzt werden. D.h., anstelle eines starren Anschlags für die Arbeitsposition kann es sinnvoller sein, einen "weichen", flexiblen Anschlag einzustellen, der über die variabel verstellbare Federhärte der Verstell- und/oder Dämpfungsmittel realisierbar ist.

So sind als Stell- und/oder Dämpungsmittel besonders linear arbeitende Stellglieder sinnvoll einzusetzen, insbesondere hydraulisch oder pneumatisch arbeitende Stellzylinder, welche die gewünschten dynamischen Eigenschaften sowie die gewünschten variablen Dämpfungseigenschaften aufweisen. Ebenso möglich ist die Verwendung geeigneter Drehantriebe als Stell- und/oder Dämpungsmittel, sofern diese ebenfalls über die die gewünschten dynamischen Eigenschaften sowie die gewünschten variablen Dämpfungseigenschaften verfügen.

Wahlweise können die Stell- und/oder Dämpfungsmittel und die Positionsüberwachung jeweils eine Einheit bilden. Darüber hinaus ist es sinnvoll, wenn die Stell- und/oder Dämpfungsmittel jeweils als hydraulisch- oder pneumatisch arbeitende Zylinder ausgeführt sind, deren Arbeitsbereiche während einer Feldfahrt der Verteilmaschine jeweils zwischen ihren beiden Endlagen liegt und vorzugsweise beabstandet von diesen bleibt. So kann es von Nachteil sein, wenn die Stellelemente zur Umsetzung der Arbeitsposition der seitlichen Sektionen an ihren jeweiligen mechanischen Anschlag bewegt werden, da in diesem Fall die variablen Dämpfungseigenschaften der Stellelemente nicht mehr in der gewünschten Weise genutzt werden können. Vielmehr ist es sinnvoll, für die Arbeitsposition einen Rest-Verstellweg vorzusehen, wodurch die Stellelemente nicht nur als dynamische Dämpfer verwendet werden können. Darüber hinaus kann der verbleibende Rest-Verstellweg einen Schutz gegen Beschädigungen der Spritzgestänge-Gelenke bieten, wenn plötzliche hohe dynamische Belastungen auftreten, da in diesen Fällen ein nachgiebiger Anschlag zur Verfügung steht, der durch entsprechende Regelungsparameter in gewünschter Weise verhärtet werden kann, bspw. durch Druckbeaufschlagung, um für alle auftretenden Situationen zu vermeiden, dass das Gelenk gegen einen harten mechanischen Anschlag stößt.

Vorzugsweise kann die Geschwindigkeitsüberwachung der erfindungsgemäßen landwirtschaftlichen Verteilmaschine so konzipiert und konfiguriert sein, dass diese ermittelt, ob die Verteilmaschine beschleunigt oder verzögert oder mit konstanter Geschwindigkeit bewegt wird.

Die Stell- und/oder Dämpfungsmittel können zur Reduzierung des Federwegs der seitlichen Sektionen im Wesentlichen in Phasen kontinuierlicher Fortbewegung der Verteilmaschine derartig angesteuert werden, dass die Elastizität bzw. der Federweg zusätzlich verringert wird, um auf diese Weise für eine relativ steife Aufhängung zu sorgen. Außerdem kann vorgesehen sein, dass die Regelung der Stell- und/oder Dämpfungsmittel anhand der Geschwindigkeit der Verteilmaschine, der Position der seitlichen Sektionen zum Mittelteil und dem Zeitraum, über welchen die Geschwindigkeit und die Position anliegt, erfolgt.

Weiterhin werden nachfolgend nochmals wichtigste Aspekte des mit der Erfindung definierten Verfahrens in verschiedenen Ausführungsvarianten und technischen Alternativvarianten erläutert, wodurch das Verständnis des wesentlichen Inhalts der Erfindung erleichtert werden soll. So sieht das erfindungsgemäße Verfahren zur Steuerung und/oder Regelung einer Verteilvorrichtung einer fahrbaren landwirtschaftlichen Verteilmaschine gemäß obiger Definition, die dem Ausbringen von flüssigen und/oder festen Wirkstoffen dient, vor, dass die Stell- und/oder Dämpfungsmittel zur Reduzierung und/oder Beeinflussung der Elastizitäten bzw. des Federwegs in Abhängigkeit von ermittelten Bewegungsparametern der Verteilmaschine variabel angesteuert werden. Wie bereits oben definiert, weist die Verteilmaschine eine ungefähr parallel zu einer Fahrtrichtung drehbar gelagerte Verteilvorrichtung mit einem Mittelteil und jeweils beidseitig daran angelenkte und über vertikale Schwenk- und Drehachsen drehbar gelagerten seitliche Sektionen auf. Die Verteilvorrichtung erstreckt sich quer zur Fahrtrichtung. Die seitlichen Sektionen oder Auslegerarme des Spritzgestänges weisen jeweils über die vertikalen Schwenk- und Drehachsen Elastizitäten und/oder einen Federweg auf. Zur Reduzierung der Elastizitäten bzw. des Federwegs können die Stell- und/oder Dämpfungsmittel eingesetzt werden, welche von einer Regeleinheit in Abhängigkeit von der mittels Überwachungseinrichtungen ermittelten Bewegungsart der Verteilmaschine bzw. deren Bewegungsprofile angesteuert werden.

Diese Ansteuerung ist variabel, wodurch die Elastizitäten bzw. Federwege der Anlenkungen der Sektionen am Mittelteil beeinflusst werden können. Insbesondere können die Dämpfungscharakteristiken der Stell- und/oder Dämpfungsmittel in Abhängigkeit von den Sensorwerten der Überwachungseinrichtungen variabel verstellt werden. Sinnvollerweise verarbeiten die Überwachungseinrichtungen zumindest die Signale einer Positionsüberwachung und/oder einer Geschwindigkeitsüberwachung sowie ggf. die Signale weiterer Sensoren.

Die zwischen dem Mittelteil und den jeweils beidseitig daran angelenkten seitlichen Sektionen jeweils angeordneten Stell- und/oder Dämpfungsmittel sind jeweils unabhängig voneinander in ihren Elastizitäten und/oder ihren Federwegen verstellbar. Somit kann auch die Regelung der Stell- und/oder Dämpfungsmittel anhand der Geschwindigkeit der Verteilmaschine, der Position der seitlichen Sektionen zum Mittelteil und dem Zeitraum, über welchem die Geschwindigkeit und die Position anliegt, erfolgen. Vorzugsweise ist die Geschwindigkeitsüberwachung so konzipiert und konfiguriert, dass sie ermittelt, ob die Verteilmaschine beschleunigt oder verzögert wird, und dass sie ermittelt, ob die Verteilmaschine mit konstanter Geschwindigkeit bewegt wird.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die als nicht einschränkendes Beispiel dient und auf die beigefügten Zeichnungen Bezug nimmt.
Fig. 1 zeigt eine als selbstfahrende Feldspritze mit Spritzgestänge ausgebildete landwirtschaftliche Verteilmaschine in schematischer und perspektivischer Ansicht.
Fig. 2 zeigt eine Detailansicht des Mittelteils einer selbstfahrenden Feldspritze wie in Fig. 1 in schematischer und perspektivischer Ansicht.
Fig. 3 zeigt eine als selbstfahrende Feldspritze mit Spritzgestänge ausgebildete landwirtschaftliche Verteilmaschine in schematischer Draufsicht.
Fig. 4 verdeutlicht in einem Flussdiagramm, wie die Verarbeitung der erfassten Überwachungsparameter und deren Verarbeitung in einer Regeleinheit erfolgen kann.

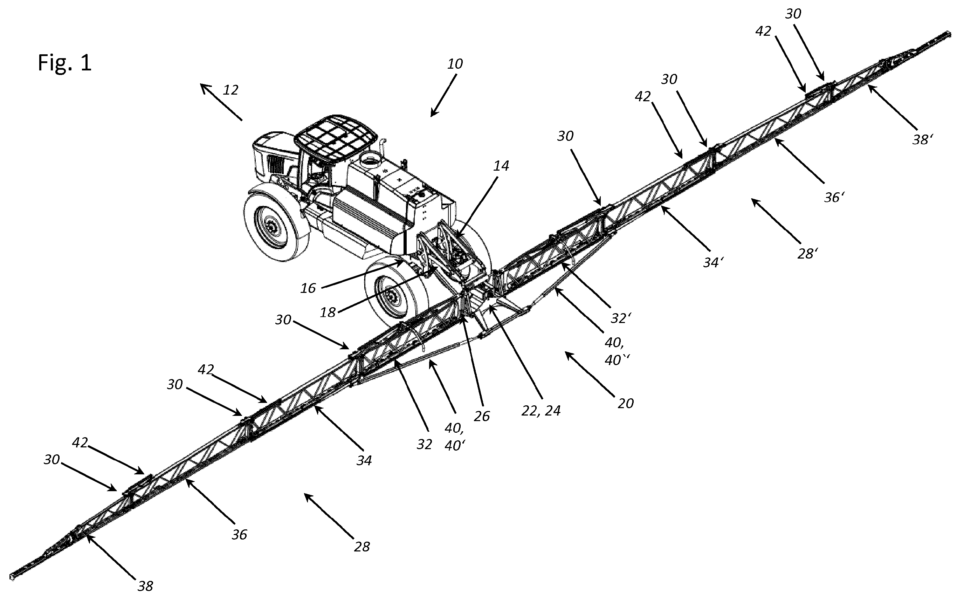

Gleiche oder gleich wirkende Elemente der Erfindung sind in den Figuren 1 bis 4 mit jeweils gleichen Bezugsziffern bezeichnet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindungsgemäße Erfindung ausgestaltet sein kann und stellen keine abschließende Begrenzung dar.

Die nachfolgend näher erläuterten Figuren 1 bis 4 verdeutlichen eine bevorzugte Ausführungsform einer Verteilvorrichtung bzw. eines Spritzgestänges, wie es typischerweise an landwirtschaftlichen Verteilmaschinen, Zugmaschinen oder an Trägerfahrzeugen angehängt oder aufgesattelt sein kann. Solche Trägerfahrzeuge können bspw. Spezialfahrzeuge sein, die einen Tank für flüssiges Spritzmittel sowie die erfindungsgemäße Verteilvorrichtung oder Spritzgestänge tragen können. Als Zugfahrzeuge kommen jedoch gleichermaßen landwirtschaftliche Zugmaschinen bzw. sog. Traktoren in Frage, an denen sich solche Spritz- oder Ausbringgestänge an einer heckseitigen hydraulisch betätigbaren Hebeeinrichtung - meist als Dreipunktgestänge ausgebildet - ankoppeln lassen.

Die schematische Perspektivansicht der Fig. 1 zeigt eine landwirtschaftliche Verteilmaschine in Form einer Feldspritze 10, welche als selbstfahrende Feldspritze 10 ausgeführt ist. Im hinteren Bereich erstreckt sich, quer zur Fahrtrichtung 12 eine Verteilvorrichtung 20 bzw. ein Spritzgestänge 20.

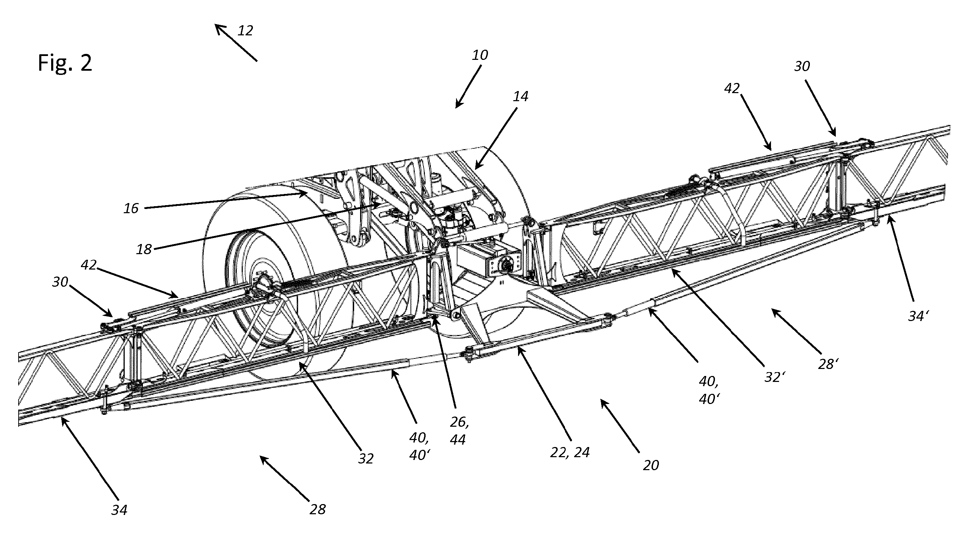

Die schematische Perspektivansicht der Fig. 2 zeigt eine identische Feldspritze 10 wie in Figur 1, jedoch eine Detailansicht des Mittelteils 24 der Verteilvorrichtung 20.

Auf beiden Figuren 1 und 2 ist eine Verteilvorrichtung 20 dargestellt, welche über einen Mittelrahmen 22 und über einen Adapter 14, höhenverstellbar mit einem Hauptrahmen 16 der Feldspritze 10 verbunden ist. Die Höhenverstellung erfolgt mit Hilfe eines Verstellelements 18. Dieses Verstellelement 18 ist in Form eines hydraulisch arbeitenden Zylinders ausgeführt.

Die Verteilvorrichtung 20 besteht jeweils aus einem Mittelteil 24, welches sich aus einem Mittelrahmen 22 und sich daran angebrachten vertikalen Schwenkachsen 26 zusammensetzt. An diesen Schwenkachsen 26 sind seitliche Sektionen 28, 28' drehbar gelagert angeordnet. Die seitlichen Sektionen 28, 28' setzen sich aus mehreren einzelnen Gestängeabschnitten 32, 32', 34, 34' 36, 36', 38, 38' zusammen, wobei die Anzahl dieser Gestängeabschnitte 32, 32', 34, 34' 36, 36', 38, 38' von der Arbeitsbreite der Feldspritze 10 abhängig ist. Die Gestängeabschnitte 32, 32', 34, 34' 36, 36', 38, 38' sind jeweils über vertikale Drehachsen 30 gemeinsam verbunden. An den einzelnen Abschnitten 32, 32', 34, 34' 36, 36', 38, 38' sowie am Mittelteil 24 können bspw. ein Vielzahl, von hier nicht dargestellten Spritzdüsen zum gleichmäßigen und/oder gesteuerten Ausbringen von flüssigem Spritzmittel oder anderem Ausbringgut angeordnet sein.

Zwischen dem Mittelrahmen 22 und den seitlichen Sektionen 28, 28' ist jeweils ein Stellglied 40 angeordnet. Zwischen den einzelnen Gestängeabschnitten 32, 32', 34, 34' 36, 36', 38, 38' sind jeweils Linearantriebe 42 angeordnet. Das Stellglied 40 sowie die Linearantriebe 42 sind als hydraulisch arbeitende Zylinder ausgeführt. Mit Hilfe der Stellglieder 40 und der Linearantriebe 42 können die einzelnen Abschnitte 32, 32', 34, 34' 36, 36', 38, 38' bzw. die seitlichen Ausleger 28, 28' um die Drehachse 30 bzw. um die Schwenkachse 26 zwischen einer ersten, wie in Fig. 1 und Fig. 2 dargestellten, Arbeitsposition und einer zweiten, Transportposition verschwenkt werden. Bei dieser zweiten Transportposition werden jeweils die Abschnitte 32, 32', 34, 34' 36, 36', 38, 38' um 180° zueinander verschwenkt und die seitlichen Sektionen 28, 28' um 90° zum Mittelteil 24, so dass die eingefalteten Sektionen seitlich am Trägerfahrzeug anliegen können.

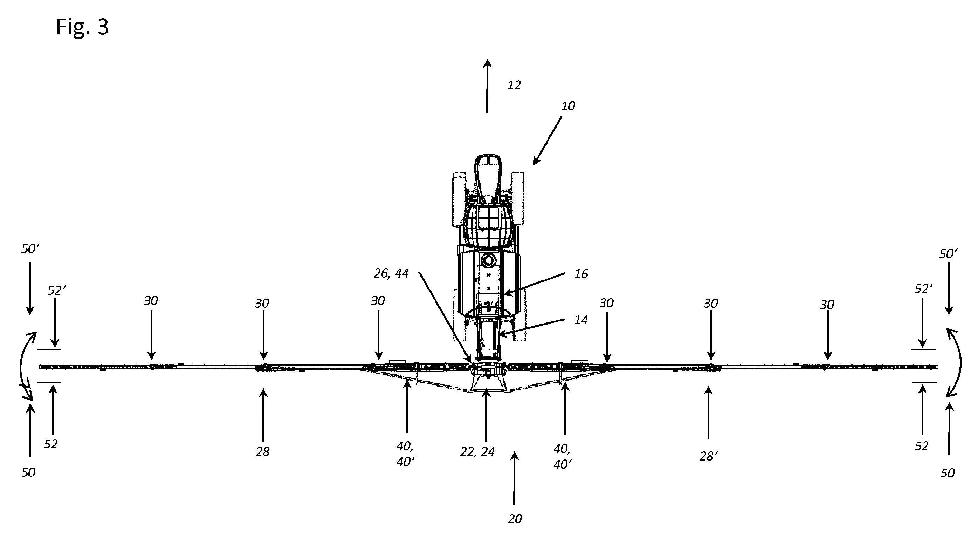

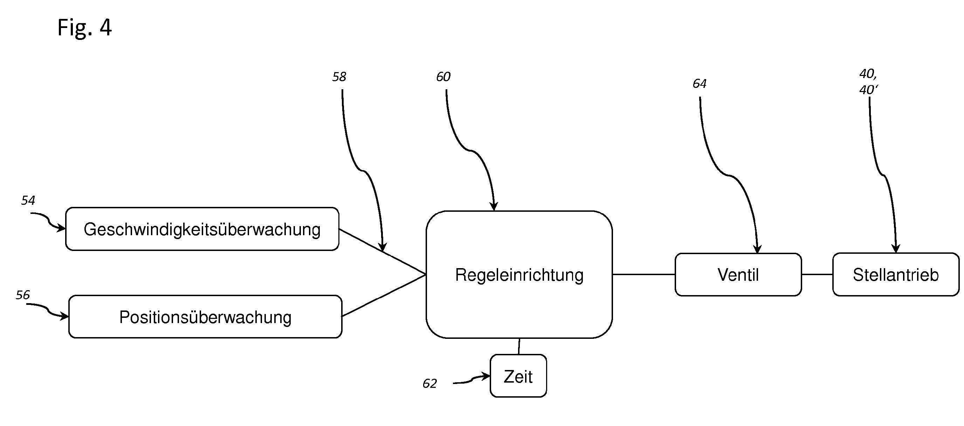

Das Stellglied 40 ist darüber hinaus so gestaltet, das diesem noch Mittel 40' zugeordnet sind. Mit diesem Mittel 40' erfolgt die Nachregelung bzw. die Verringerung des Federwegs 52, 52' wie in Fig. 3 und Fig. 4 beschrieben. Die Mittel 40' werden nachfolgend auch als variabel ansteuerbare Stell- und/oder Dämpfungsmittel 40' bezeichnet.

Eine schematische Draufsicht einer als selbstfahrende Feldspritzte 10 ausgeführten landwirtschaftlichen Maschine in Arbeitsposition zeigt die Fig. 3. Im hinteren Bereich erstreckt sich quer zur Fahrtrichtung 12 die Verteilvorrichtung 20, die über einen Adapter 14 mit einem Hauptrahmen 16 der Feldspritze 10 verbunden ist. Die Verteilvorrichtung 20 besteht aus einem Mittelteil 24 und aus, an dem Mittelteil 24 mittels vertikalen Schwenkachsen 26 angebrachten seitlichen Sektionen 28, 28'. Über die Schwenkachsen 26 kann die Verteilervorrichtung 20 in oder entgegengesetzt zur Fahrtrichtung 12 Schwingen 50, 50'.

Um die durch die Schwingungen 50, 50' hervorgerufenen hohen Kräfte an den Schwenkachsen 26 und den Drehachsen 30 zu reduzieren, sind an diesen hier nicht dargestellte Dämpfungselemente angebracht. Die Dämpfungselemente 44 sind so gestaltet, dass die Verteilvorrichtung 20 einen Federweg 52, 52' aufweist; d.h. die seitlichen Sektionen 28, 28' können trotz der Dämpfungselemente 44 einer gewissen Schwingung 50, 50' unterliegen. Besonders bemerkbar macht sich dieses Verhalten bei Fahrten mit der Feldspritze 10 in Hanglagen. Durch die Federwege 52, 52' der Dämpfungselemente 44 können sich die seitlichen Sektionen 28, 28, bei Hangfahren aus ihrer Ruhelage bzw. aus der Arbeitsposition in eine ausgelenkte Position bewegen, in welcher die Gestängeabschnitte 32, 32', 34, 34' 36, 36', 38, 38' sowie das Mittelteil 24 nicht mehr in einer Linie quer zur Fahrtrichtung 12 stehen.

Zwischen dem Mittelrahmen 22 und den seitlichen Sektionen 28, 28' ist jeweils ein Stellglied 40 angeordnet. Mit diesem Stellglied 40 kann die Verteilvorrichtung 20 zum einen zwischen der Arbeits- und der Transportposition verschwenkt werden. Zum anderen ist der Stellglied 40 so konzipiert, das diesem noch Stell- und/oder Dämpfungsmittel 40' zugeordnet sind, mit Hilfe derer der Federweg 52, 52' reduziert bzw. minimiert wird.

Zwischen dem Mittelteil 24 und den seitlichen Auslegern 28, 28' ist eine, hier nicht dargestellte Positionsüberwachung 54 in Form eines Winkelsensors angebracht. Mit Hilfe dieser Positionsüberwachung 54 wird die aktuell vorhandene Schwingung 50, 50' ermittelt.

An der Feldspritze 10 sind, hier nicht dargestellte, Überwachungseinrichtungen zur Geschwindigkeitsüberwachung 56 angebracht. Mit Hilfe dieser wird ermittelt, welche Art der Bewegung die Feldspritze aktuell durchführt, also ob die Feldspritze beschleunigt oder verzögert wird, oder ob die Feldspritze mit einer konstanten Geschwindigkeit bewegt wird.

Ein Flussdiagramm der Verschaltung der Positions- und der Geschwindigkeitsüberwachung 56 sowie der Regeleinheit 60 gibt die Fig. 4 wieder. Mit Hilfe der Geschwindigkeitsüberwachung 56 wird zunächst ermittelt, welche Art der Bewegung die Feldspritze 10 aktuell durchführt, d.h. wird die Feldspritze 10 beschleunigt, verzögert oder bewegt sich diese mit konstanter Geschwindigkeit.

Eine Positionsüberwachung 58 ermittelt die Schwingung 50, 50' der seitlichen Sektionen 28, 28' zum Mittelteil, also die Abweichung der seitlichen Ausleger 28, 28' zur Sollposition der Arbeitsposition. Die durch die Geschwindigkeitsüberwachung 56 und die Positionsüberwachung 58 ermittelten Werte werden anschließend über Signalleitungen 58 an eine Regeleinrichtung bzw. eine Regeleinheit 60 übermittelt. In dieser Regeleinheit 60 ist zusätzlich noch eine voreingestellte Zeit 62 hinterlegt, die Ebenfalls zur Auswertung der vorhandenen Bewegungsart benötigt wird.

Wird nun durch die Geschwindigkeitsüberwachung 56 eine konstante Geschwindigkeit und von der Positionsüberwachung 58 ein Federweg 52, 52' über den Zeitraum der vorher in der Regeleinheit 60 hinterlegten Zeit 62 überschritten, erkennt die Regeleinheit 60, dass es sich um eine Hangfahrt handeln muss. Die Regeleinheit 60 steuert nun ein Ventil 64 an, mit welchem die Stell- und/oder Dämpfungsmittel 40' angesteuert werden. Anhand der Positonsüberwachung 58 erkennt die Regeleinheit 60 zusätzlich, in welche Richtung die Schwingung 50, 50' der seitlichen Sektionen 28, 28' erfolgt und steuert entsprechend das Ventil 64 bzw. die Mittel 40' an. Sobald die Verteilvorrichtung 20 wieder die Sollposition erreicht, erfasst dies wiederum die Positonsüberwachung 58 und gibt ein Signal an die Regeleinheit 60 aus, wodurch die Nachregelung der Stell- und/oder Dämpfungsmittel 40' wieder unterbrochen wird. Ebenso wird die Nachregelung unterbrochen, sobald die Geschwindigkeitsüberwachung 56 eine Beschleunigung oder Verzögerung der Feldspritze 10 erkennt oder sobald die Positionsüberwachung 58 einen maximalen Wert wieder unterschreitet.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu Verlassen.

### Bezugszeichenliste:

- 10: Feldspritze / Verteilmaschine
- 12: Fahrtrichtung
- 14: Adapter
- 16: Hauptrahmen
- 18: Verstellelement
- 20: Verteilvorrichtung / Spritzgestänge
- 22: Mittelrahmen
- 24: Mittelteil
- 26: Schwenkachse
- 28,28': Sektion
- 30: Drehachse
- 32: Gestänge Abschnitt 1
- 34: Gestänge Abschnitt 2
- 36: Gestänge Abschnitt 3
- 38: Gestänge Abschnitt 4
- 40, 40': Stellglied, Mittel, Stell- und/oder Dämpfungsmittel
- 42: Linearantrieb
- 44: Dämpfungselement
- 50, 50': Schwingung
- 52, 52': Federweg
- 54: Positionsüberwachung
- 56: Geschwindigkeitsüberwachung
- 58: Signalleitung
- 60: Regeleinheit
- 62: Zeit
- 64: Ventil

## Patentansprüche

1. Fahrbare landwirtschaftliche Verteilmaschine (10) zum Ausbringen von flüssigen und/oder festen Wirkstoffen, mit einer an der Verteilmaschine (10) angeordneten, ungefähr parallel zu einer Fahrtrichtung (12) gelagerten Verteilvorrichtung (20) mit einem Mittelteil (24) und jeweils beidseitig daran angelenkte und über vertikale Schwenk- und Drehachsen (26, 30) drehbar gelagerte seitliche Sektionen (28, 28'), wobei sich die Verteilvorrichtung (20) quer zur Fahrtrichtung (12) erstreckt und die seitlichen Sektionen (28, 28') über die vertikalen Schwenk- und Drehachsen (26, 30) jeweils Elastizitäten bzw. einen Federweg (52, 52') aufweisen, wobei zur Reduzierung und/oder Beeinflussung der Elastizitäten bzw. des Federwegs (52, 52') Stell- und/oder Dämpfungsmittel (40') angeordnet sind, welche von einer Regeleinheit (60) in Abhängigkeit von der mittels Überwachungseinrichtungen (54, 56) ermittelten Bewegungsart der Verteilmaschine (10) ansteuerbar sind, wobei die Stell- und/oder Dämpfungsmittel (40') zur Reduzierung und/oder Beeinflussung der Elastizitäten bzw. des Federwegs (52, 52') in Abhängigkeit von ermittelten Bewegungsparametern der Verteilmaschine (10) variabel ansteuerbar sind, **dadurch gekennzeichnet, dass** eine Geschwindigkeitsüberwachung (56) so konzipiert ist, dass diese ermittelt, ob die Verteilmaschine (10) beschleunigt oder verzögert oder mit konstanter Geschwindigkeit bewegt wird.

2. Landwirtschaftliche Verteilmaschine nach Anspruch 1, bei der die Überwachungseinrichtungen (54, 56) wenigstens Einrichtungen zur Positionsüberwachung (54) und/oder zur Geschwindigkeitsüberwachung (56) umfassen.

3. Landwirtschaftliche Verteilmaschine nach Anspruch 1 oder 2, bei der zwischen dem Mittelteil (24) und den jeweils beidseitig daran angelenkten seitlichen Sektionen (28, 28') jeweils wenigstens ein Stell- und/oder Dämpfungsmittel (40') angeordnet ist, wobei die vorzugsweise zwei Stell- und/oder Dämpfungsmittel (40') jeweils unabhängig voneinander in ihren Elastizitäten bzw. ihren Federwegen (52, 52') verstellbar sind.

4. Landwirtschaftliche Verteilmaschine nach einem der Ansprüche 1 bis 3, bei der die Stell- und/oder Dämpungsmittel (40') jeweils durch linear arbeitende Stellglieder, durch hydraulisch oder pneumatisch arbeitende Stellzylinder oder durch Drehantriebe gebildet sind.

5. Landwirtschaftliche Verteilmaschine nach einem der Ansprüche 1 bis 4, bei der die Stell- und/oder Dämpfungsmittel (40') und die Positionsüberwachung (54) jeweils eine Einheit bilden.

6. Landwirtschaftliche Verteilmaschine nach einem der Ansprüche 1 bis 5, bei der die Stell- und/oder Dämpfungsmittel (40') jeweils als hydraulisch- oder pneumatisch arbeitende Zylinder ausgeführt sind, deren Arbeitsbereiche während einer Feldfahrt der Verteilmaschine (10) jeweils zwischen ihren beiden Endlagen liegt und vorzugsweise beabstandet von diesen bleibt.

7. Landwirtschaftliche Verteilmaschine nach einem der Ansprüche 1 bis 6, deren Stell-und/oder Dämpfungsmittel (40') zur Reduzierung des Federwegs (52, 52') im Wesentlichen in Phasen kontinuierlicher Fortbewegung der Verteilmaschine (10) derartig angesteuert werden, dass die Elastizität bzw. der Federweg (52, 52') zusätzlich verringert wird.

8. Landwirtschaftliche Verteilmaschine nach einem der Ansprüche 1 bis 7, bei der die Regelung der Stell- und/oder Dämpfungsmittel (40') anhand der Geschwindigkeit der Verteilmaschine (10), der Position der seitlichen Sektionen (28, 28') zum Mittelteil (24) und dem Zeitraum, über welchen die Geschwindigkeit und die Position anliegt, erfolgt.

9. Verfahren zur Steuerung und/oder Regelung einer Verteilvorrichtung (20) einer fahrbaren landwirtschaftlichen Verteilmaschine (10) zum Ausbringen von flüssigen und/oder festen Wirkstoffen, die eine an der Verteilmaschine (10) angeordnete, ungefähr parallel zu einer Fahrtrichtung (12) gelagerte Verteilvorrichtung (20) mit einem Mittelteil (24) und jeweils beidseitig daran angelenkte und über vertikale Schwenk- und Drehachsen (26, 30) drehbar gelagerten seitliche Sektionen (28, 28') aufweist, wobei sich die Verteilvorrichtung (20) quer zur Fahrtrichtung (12) erstreckt und die seitlichen Sektionen (28, 28') über die vertikalen Schwenk- und Drehachsen (26, 30) Elastizitäten und/oder einen Federweg (52, 52') aufweisen, wobei zur Reduzierung der Elastizitäten bzw. des Federwegs (52, 52') Stell- und/oder Dämpfungsmittel (40') angeordnet sind, welche von einer Regeleinheit (60) in Abhängigkeit von der mittels Überwachungseinrichtungen (54, 56) ermittelten Bewegungsart der Verteilmaschine (10) angesteuert werden, wobei die Stell- und/oder Dämpfungsmittel (40') zur Reduzierung und/oder Beeinflussung der Elastizitäten bzw. des Federwegs (52, 52') in Abhängigkeit von ermittelten Bewegungsparametern der Verteilmaschine (10) variabel angesteuert werden, **dadurch gekennzeichnet, dass** eine Geschwindigkeitsüberwachung (56) so konzipiert ist, dass diese ermittelt, ob die Verteilmaschine (10) beschleunigt oder verzögert wird, und dass diese ermittelt, ob die Verteilmaschine (10) mit konstanter Geschwindigkeit bewegt wird.

10. Verfahren nach Anspruch 9, bei dem die Dämpfungscharakteristiken der Stell- und/oder Dämpfungsmittel (40') in Abhängigkeit von den Sensorwerten der Überwachungseinrichtungen (54, 56) variabel verstellt werden.

11. Verfahren nach Anspruch 9 oder 10, bei dem die Überwachungseinrichtungen (54, 56) Signale einer Positionsüberwachung (54) und/oder einer Geschwindigkeitsüberwachung (56) verarbeiten.

12. Verfahren nach einem der Ansprüche 9 bis 11, bei dem die zwischen dem Mittelteil (24) und den jeweils beidseitig daran angelenkten seitlichen Sektionen (28, 28') jeweils angeordneten Stell- und/oder Dämpfungsmittel (40') jeweils unabhängig voneinander in ihren Elastizitäten und/oder ihren Federwegen (52, 52') verstellbar sind.

13. Verfahren nach einem der Ansprüche 9 bis 12, bei dem die Regelung der Stell- und/oder Dämpfungsmittel (40') anhand der Geschwindigkeit der Verteilmaschine (10), der Position der seitlichen Sektionen (28, 28') zum Mittelteil (24) und dem Zeitraum, über welchem die Geschwindigkeit und die Position anliegt, erfolgt.

## Claims

1. A movable agricultural distribution machine (10) for spreading liquid and/or solid active agents with a distribution apparatus (20) arranged on the distribution machine (10), which distribution apparatus (20) is mounted approximately parallel to a driving direction (12) and which has a middle part (24) and lateral sections (28, 28') linked thereto on each of both sides and rotatably mounted by way of vertical pivoting and rotation axes (26, 30), wherein the distribution apparatus (20) extends transversely to the driving direction (12) and the lateral sections (28, 28') each have elasticities or a spring deflection (52, 52'), as the case may be, by way of the vertical pivoting and rotation axes (26, 30), wherein actuating and/or damping means (40') are arranged for reducing and/or influencing the elasticities or the spring deflection (52, 52'), as the case may be, which actuating and/or damping means (40') are controllable by a control unit (60) based on the movement type of the distribution machine (10) as determined by means of monitoring devices (54, 56), wherein the actuating and/or damping means (40') for reducing and/or influencing the elasticities or the spring deflection (52, 52'), as the case may be, are variably controllable based on determined movement parameters of the distribution machine (10), **characterised in that** a speed monitoring (56) is designed such as to determine whether the distribution machine (10) is being accelerated or decelerated or being moved at a constant speed.

2. The agricultural distribution machine as recited in claim 1, in which the monitoring devices (54, 56) comprise at least devices for position monitoring (54) and/or for speed monitoring (56).

3. The agricultural distribution machine as recited in claim 1 or 2, in which at least one actuating and/or damping means (40') is arranged in each case between the middle part (24) and the lateral sections (28, 28') linked thereto on each of both sides, wherein the preferably two actuating and/or damping means (40') are each adjustable independently of each other in their elasticities or in their spring deflections (52, 52'), as the case may be.

4. The agricultural distribution machine as recited in one of the claims 1 to 3, in which the actuating and/or damping means (40') are each formed by linearly operating actuators, by hydraulically or pneumatically operating actuating cylinders or by rotary drives.

5. The agricultural distribution machine as recited in one of the claims 1 to 4, in which the actuating and/or damping means (40') and the position monitoring (54) in each case form a unit.

6. The agricultural distribution machine as recited in one of the claims 1 to 5, in which the actuating and/or damping means (40') are each designed as hydraulically or pneumatically operating cylinders, the working ranges of which are in each case located between the two end positions of the cylinders and preferably remain spaced apart from these end positions while the distribution machine (10) is driving in the field.

7. The agricultural distribution machine as recited in one of the claims 1 to 6, of which the actuating and/or damping means (40') for reducing the spring deflection (52, 52') are controlled essentially while the distribution machine (10) is continuously moving along such that the elasticity or the spring deflection (52, 52'), as the case may be, is additionally decreased.

8. The agricultural distribution machine as recited in one of the claims 1 to 7, in which the control of the actuating and/or damping means (40') is carried out by way of the speed of the distribution machine (10), of the position of the lateral sections (28, 28') in relation to the middle part (24) and of the time period over which the speed and the position apply.

9. A method for controlling and/or regulating a distribution apparatus (20) of a movable agricultural distribution machine (10) for spreading liquid and/or solid active agents, which has a distribution apparatus (20) arranged on the distribution machine (10), which distribution apparatus (20) is mounted approximately parallel to a driving direction (12) and which has a middle part (24) and lateral sections (28, 28') linked thereto on each of both sides and rotatably mounted by way of vertical pivoting and rotation axes (26, 30), wherein the distribution apparatus (20) extends transversely to the driving direction (12) and the lateral sections (28, 28') have elasticities and/or a spring deflection (52, 52') by way of the vertical pivoting and rotation axes (26, 30), wherein actuating and/or damping means (40') are arranged for reducing and/or influencing the elasticities or the spring deflection (52, 52'), as the case may be, which actuating and/or damping means (40') are controlled by a control unit (60) based on the movement type of the distribution machine (10) as determined by means of monitoring devices (54, 56), wherein the actuating and/or damping means (40') for reducing and/or influencing the elasticities or the spring deflection (52, 52'), as the case may be, are variably controlled based on determined movement parameters of the distribution machine (10), **characterised in that** a speed monitoring (56) is designed such as to determine whether the distribution machine (10) is being accelerated or decelerated and such as to determine whether the distribution machine (10) is being moved at a constant speed.

10. The method as recited in claim 9, in which the damping characteristics of the actuating and/or damping means (40') are variably adjusted based on the sensor values from the monitoring devices (54, 56).

11. The method as recited in claim 9 or 10, in which the monitoring devices (54, 56) process signals from a position monitoring (54) and/or from a speed monitoring (56).

12. The method as recited in one of the claims 9 to 11, in which the actuating and/or damping means (40'), which are arranged in each case between the middle part (24) and the lateral sections (28, 28') linked thereto on each of both sides, are each adjustable independently of each other in their elasticities and/or in their spring deflections (52, 52').

13. The method as recited in one of the claims 9 to 12, in which the control of the actuating and/or damping means (40') is carried out by way of the speed of the distribution machine (10), of the position of the lateral sections (28, 28') in relation to the middle part (24) and of the time period over which the speed and the position apply.

## Revendications

1. Machine de distribution agricole roulante (10) pour épandre des agents actifs liquides et/ou solides, avec un dispositif de distribution (20) agencé sur la machine de distribution (10) et disposé de manière approximativement parallèle à un sens de déplacement (12), muni d'une pièce médiane (24) et des sections (28, 28') latérales disposées rotatives autour d'axes verticaux de pivot et de rotation (26, 30), agencées chacune des deux côtés de la partie médiane, le dispositif de distribution (20) s'étendant perpendiculairement au sens de déplacement (12) et les sections latérales (28, 28') présentant chacune des élasticités ou un débattement (52, 52') par les axes verticaux de pivot et de rotation (26, 30), des moyens de manoeuvre et/ou d'amortissement (40') étant agencés pour réduire et/ou influencer les élasticités ou le débattement (52, 52'), lesdits moyens étant commandables par un ensemble régulateur (60) en fonction du mode de déplacement de la machine de distribution (10) déterminé au moyen de dispositifs de surveillance (54, 56), les moyens de manoeuvre et/ou d'amortissement (40') pour réduire et/ou influencer les élasticités ou le débattement (52, 52') en fonction de paramètres de déplacement de la machine de distribution (10) déterminés étant commandables de manière variable, **caractérisée en ce qu'**un contrôle de la vitesse (56) est conçu de telle sorte qu'il détermine si la machine de distribution (10) est accélérée, retardée ou déplacée à vitesse constante.

2. Machine de distribution agricole selon la revendication 1, les dispositifs de contrôle (54, 56) comprenant au moins des dispositifs de contrôle de la position (54) et/ou de contrôle de la vitesse (56).

3. Machine de distribution agricole selon la revendication 1 ou 2, au moins un moyen de manoeuvre et/ou d'amortissement (40') étant disposé respectivement entre la pièce médiane (24) et les sections latérales (28, 28') qui y sont articulées chacune de part et d'autre, les de préférence deux moyens de manoeuvre et/ou d'amortissement (40') étant réglables indépendamment l'un de l'autre dans leurs élasticités ou débattement (52, 52') respectif.

4. Machine de distribution agricole selon l'une quelconque des revendications 1 à 3, les moyens de manoeuvre et/ou d'amortissement (40') étant respectivement constitués par des actionneurs fonctionnant de manière linéaire, par des vérins de servocommande à mode de fonctionnement hydraulique ou pneumatique, ou par des entraînements rotatifs.

5. Machine de distribution agricole selon l'une quelconque des revendications 1 à 4, les moyens de manoeuvre et/ou d'amortissement (40') et le contrôle de position (54) constituant chacun une entité.

6. Machine de distribution agricole selon l'une quelconque des revendications 1 à 5, les moyens de manoeuvre et/ou d'amortissement (40') étant chacun réalisés comme des vérins hydrauliques ou pneumatiques dont les zones de travail se trouvent, lorsque la machine de distribution (10) parcourt le champ, chacune entre leurs deux positions finales et restent de préférence à distance de celles-ci.

7. Machine de distribution agricole selon l'une quelconque des revendications 1 à 6, les moyens de manoeuvre et/ou d'amortissement (40') pour réduire le débattement (52, 52') étant commandés sensiblement en phases de déplacement continu de la machine de distribution (10) de telle sorte que l'élasticité ou le débattement (52, 52') est réduit davantage.

8. Machine de distribution agricole selon l'une quelconque des revendications 1 à 7, le réglage des moyens de manoeuvre et/ou d'amortissement (40') s'effectuant en fonction de la vitesse de la machine de distribution (10), de la position des sections latérales (28, 28') par rapport à la pièce médiane (24) et à la période de temps sur laquelle la vitesse et la position est ajustée.

9. Procédé de commande et/ou de règlement d'un dispositif de distribution (20) d'une machine de distribution agricole roulante (10) pour épandre des agents actifs liquides et/ou solides, laquelle présente un dispositif de distribution (20) agencé sur la machine de distribution (10) et disposé de manière approximativement parallèle à un sens de déplacement (12), muni d'une pièce médiane (24) et des sections (28, 28') latérales disposées rotatives autour d'axes verticaux de pivot et de rotation (26, 30), agencées chacune des deux côtés de la partie médiane, le dispositif de distribution (20) s'étendant perpendiculairement au sens de déplacement (12) et les sections latérales (28, 28') présentant des élasticités ou un débattement (52, 52') par les axes verticaux de pivot et de rotation (26, 30), des moyens de manoeuvre et/ou d'amortissement (40') étant agencés pour réduire les élasticités ou le débattement (52, 52'), lesdits moyens étant commandés par un ensemble régulateur (60) en fonction du mode de déplacement de la machine de distribution (10) déterminé au moyen de dispositifs de surveillance (54, 56), les moyens de manoeuvre et/ou d'amortissement (40') pour réduire et/ou influencer les élasticités ou le débattement (52, 52') en fonction de paramètres de déplacement de la machine de distribution (10) déterminés étant commandables de manière variable, **caractérisé en ce qu'**un contrôle de la vitesse (56) est conçu de telle sorte que ledit contrôle détermine si la machine de distribution (10) est accélérée ou retardée, et qu'il détermine, si la machine de distribution (10) est déplacée à vitesse constante.

10. Procédé selon la revendication 9, les caractéristiques d'amortissement des moyens de manoeuvre et/ou d'amortissement (40') étant réglées de manière variable en fonction des valeurs détectées par les capteurs des dispositifs de surveillance (54, 56).

11. Procédé selon la revendication 9 ou 10, les dispositifs de surveillance (54, 56) mettant en oeuvre des signaux d'une surveillance de la position (54) et/ou d'une surveillance de la vitesse (56).

12. Procédé selon la revendication 9 ou 11, les moyens de manoeuvre et/ou d'amortissement (40'), qui sont disposés respectivement entre la pièce médiane (24) et les sections latérales (28, 28'), lesquelles y sont articulées chacune de part et d'autre, étant réglables indépendamment l'un de l'autre dans leurs élasticités et/ou leurs débattements (52, 52').

13. Procédé selon l'une quelconque des revendications 9 à 12, le réglage des moyens de manoeuvre et/ou d'amortissement (40') s'effectuant en fonction de la vitesse de la machine de distribution (10), de la position des sections latérales (28, 28') par rapport à la pièce médiane (24) et à la période de temps sur laquelle la vitesse et la position est ajustée.
